Europäisches Patentamt

European Patent Office

Office européen des brevets

(11) Veröffentlichungsnummer: **0 269 133**
**A2**

(12) **EUROPÄISCHE PATENTANMELDUNG**

(21) Anmeldenummer: **87200576.4**

(22) Anmeldetag: **26.03.87**

(51) Int. Cl.4: **G11B 15/44 , G11B 27/34 ,**
**G11B 23/087 , G11B 15/07**

(30) Priorität: **14.11.86 AT 3038/86**

(43) Veröffentlichungstag der Anmeldung:
**01.06.88 Patentblatt 88/22**

(84) Benannte Vertragsstaaten:
**AT DE FR GB**

(71) Anmelder: **N.V. Philips' Gloeilampenfabrieken**
**Groenewoudseweg 1**
**NL-5621 BA Eindhoven(NL)**

(72) Erfinder: **Fischer, Karl**
**c/o INT. OCTROOIBUREAU B.V. Prof.**
**Holstlaan 6**
**NL-5656 AA Eindhoven(NL)**
Erfinder: **Köck, Werner**
**c/o INT. OCTROOIBUREAU B.V. Prof.**
**Holstlaan 6**
**NL-5656 AA Eindhoven(NL)**
Erfinder: **Tuider, Wolfgang**
**c/o INT. OCTROOIBUREAU B.V. Prof.**
**Holstlaan 6**
**NL-5656 AA Eindhoven(NL)**

(74) Vertreter: **Van Weele, Paul Johannes Frits et**
**al**
**INTERNATIONAAL OCTROOIBUREAU B.V.**
**Prof. Holstlaan 6**
**NL-5656 AA Eindhoven(NL)**

(54) **System zum Aufzeichnen und/oder Wiedergeben von Signalen.**

(57) Ein Aufzeichnungs-und/oder Wiedergabegerät (1) für bandförmige Aufzeichnungsträger (20) ist zur Anzeige von Aufzeichnungsdauerwerten mit einem Zählwerk (45) ausgerüstet, das ein entlang einer Anzeigeskala (26) mit einer vorgegebenen Gesamtlänge für alle möglichen Gesamtaufzeichnungsdauerwert wanderndes Anzeigeelement (46) aufweist, das über ein stufenweise umschaltbares Geschwindigkeitswechselgetriebe (71) antreibbar ist, das auf unterschiedlich große, zu den korrespondieren Gesamtaufzeichnungsdauerwerten umgekehrt proportionale Geschwindigkeitsübersetzungen - schaltbar ist. Das Gerät (1) ist zur Aufnahme einer Kassette (4) ausgebildet, in der der Aufzeichnungsträger (20) untergebracht ist und die mindestens einen Indikator (28, 29) zur Indikation des mit diesem Aufzeichnungsträger erreichbaren Gesamtaufzeichnungsdauerwertes aufweist, und im Gerät (1) ist eine Abtasteinrichtung (91) zur Abtastung des Indikators einer in das Gerät eingesetzten Kassette vorgesehen. Die Abtasteinrichtung (91) steuert automatisch die Umschaltung des Geschwindigkeitswechselgetriebes (71) in Abhängigkeit vom abgetasteten Indikator (28, 29).

Fig.1

## System zum Aufzeichnen und/oder Wiedergeben von Signalen

Die Erfindung bezieht sich auf ein System zum Aufzeichnen-und/oder Wiedergeben von Signalen , das ein Gerät und bandförmige Aufzeichnungsträger umfaßt, die im systemgemäßen Gerät fortbewegbar und mit denen unterschiedlich große Gesamtaufzeichnungsdauerwerte erreichbar sind, welches Gerät zum Anzeigen des der jeweils im Gerät fortbewegten Aufzeichnungsträgermenge entsprechenden Aufzeichnungsdauerwertes ein Zählwerk aufweist, das ein entlang einer Anzeigeskala mit einer vorgegebenen Gesamtlänge wanderndes Anzeigeelement aufweist, das von einer Antriebseinrichtung für den Aufzeichnungsträger her über ein stufenweise umschaltbares Geschwindigkeitswechselgetriebe antreibbar ist, das korrespondierend zu den unterschiedlich großen Gesamtaufzeichnungsdauerwerten auf unterschiedlich große, zu den korrespondierenden Gesamtaufzeichnungsdauerwerten umgekehrt proportionale Geschwindigkeitsübersetzungen schaltbar ist, so daß mit der vorgegebenen Gesamtlänge der Anzeigeskala alle Gesamtaufzeichnungsdauerwerte anzeigbar sind.

Ein solches System ist aus der DE-AS 19 03 185 bekannt. Dieses bekannte Ssytem umfaßt ein sogenanntes Spulengerät, das zur Aufnahme von zwei Spulen ausgebildet ist und bei dem ein Aufzeichnungsträger beim Fortbewegen desselben von einer Spule abgewickelt und auf die andere Spule aufgewickelt wird. Die einschlägigen Spulen mit unterschiedlichen Größen, auf die unterschiedlich lange Aufzeichnungsträger aufgewickelt sind, sind in das Gerät einsetzbar. Für die Aufzeichnungsträger sind beim Aufzeichnen bzw. Wiedergeben unterschiedlich große Fortbewegungsgeschwindigkeiten wählbar, so daß je nach Spulengröße und Fortbewegungsgeschwindigkeit unterschiedlich große Gesamtaufzeichnungsdauerwerte für Informationen erreicht werden. Um bei allen wählbaren, unterschiedlich großen Gesamtaufzeichnungsdauerwerten den der jeweils im Gerät des Systems fortbewegten Aufzeichnungsträgermenge entsprechenden Aufzeichnungsdauerwert mit einem Zählwerk, das eine Anzeigeskala mit einer fix vorgegebenen Gesamtlänge aufweist, anzeigen zu können, erfolgt der Antrieb des Anzeigeelementes des Zählwerkes über ein stufenweise schaltbares Geschwindigkeits wechselgetriebe, dessen Geschwindigkeitsübersetzungen umgekehrt proportional zu den wählbaren Gesamtaufzeichnungsdauerwerten sind. Bei dem Gerät des bekannten Systems weist das Geschwindigkeitswechselgetriebe ein Kronenzahnrad mit drei zueinander koaxialen, in einer Ebene auf unterschiedlichen Durchmessern angeordneten Verzahnungen und ein Ritzel auf, das in radialer Richtung des Kronenzahnrades gegeüber diesem verstellbar und zum Umschalten des Geschwindigkeitswechselgetriebes wahlweise mit einer der Verzahnungen des Kronenzahnrades in Eingriff bringbar ist. Hiefür ist das Ritzel auf einer Welle angebracht, die in axialer Richtung verstellbar geführt und mit Hilfe eines mit ihr verbundenen Schiebers verstellbar ist, der über einen von ihm abstehenden, händisch verstellbaren Betätigungsknopf verschiebbar ist. Somit muß bei diesem bekannten System die Umschaltung des Geschwindigkeitswechselgetriebes zum Antreiben des Anzeigelementes des Zählwerkes von Hand aus erfolgen. Dies verkompliziert die Bedienung des Systems und birgt ferner die Gefahr in sich, daß der Benützer des Systems sich beim händischen Umschalten des Geschwindigkeitswechselgetriebes irren kann oder auf das händische Umschalten überhaupt vergessen kann, was dann eine irreführende falsche Anzeige zur Folge hat.

Die Erfindung hat sich zur Aufgabe gestellt, die vorstehende angeführten Schwierigkeiten beim bestehenden System zu vermeiden und ein System zu schaffen, bei dem die Umschaltung des Geswindigkeitswechselgetriebes auf besonders einfache Weise und mit Sicherheit richtig erfolgt. Hiefür ist die Erfindung dadurch gekennzeichnet, daß das Gerät zur Aufnahme von einschlägigen Kassetten ausgebildet ist, in der je ein Aufzeichnungsträger untergebracht ist, daß die Kassetten zur Indikation des mit dem Aufzeichnungsträger erreichbaren Gesamtaufzeichnungsdauerwertes je mindestens einen Indikator aufweisen und im Gerät eine Abtasteinrichtung zum Abtasten des Indikators vorgesehen ist und daß die Abtasteinrichtung die Umschaltung des Geschwindigkeitswechselgetriebes zum Antreiben des Anzeigeelementes in Abhängigkeit vom abgetasteten Indikator steuert. Auf diese Weise ist erreicht, daß die Umschaltung des Geschwindigkeitswechselgetriebes zum Antreiben des Anzeigeelementes des Zählwerks automatisch beim Ein setzen einer systemgrößen Kassette in das systemgemäße Gerät in Abhängigkeit vom abgetasteten Indikator dieser Kassette erfolgt. Dadurch, daß die Umschaltung des Geschwindigkeitswechselgetriebes zum Antreiben des Anzeigeelementes des Zählwerkes in Abhängigkeit vom abgetasteten Indikator erfolgt, ist stets die richtige Umschaltung des Geschwindigkeitswechselgetriebes gewährleistet, so daß es zu keiner falschen Anzeige mit dem Zählwerk kommen kann.

An dieser Stelle sei erwähnt, daß aus der US-PS 3 684 298 ein System mit einem Gerät bekannt ist, das zur Aufnahme einer Kassette mit einem darin untergebrachten Aufzeichnungsträger ausgebildet ist, wobei durch Umschalten der Forbewegungsgeschwindigkeit des Aufzeichnungsträgers beim Aufzeichnen bzw. Wiedergeben unterschiedlich große Gesamtaufzeichnungsdauerwerte erreichbar sind. Jede der einschlägigen Kassetten weist hiebei einen in einem Kassetteneckenbereich vorgesehenen Indikator zur Indikation des mi dem in der betreffenden Kassette untergebrachten Aufzeichnungsträger erreichbaren Gesamtaufzeichnungsdauerwertes auf. Zum Abtasten des Indikators jeder Kassette weist das einschlägige Gerät eine Abtasteinrichtung auf, die in Abhängigkeit vom abgetasteten Indikator die Umschaltung einer Antriebseinrichtung für den Aufzeichnungsträger steuert, so daß dieser mit einer durch den Indikator festgelegten Fortbewegungsgeschwindigkeit fortbewegt wird. Demgegenüber steuert beim erfindungsgemäßen System die Abtasteinrichtung des Gerätes in Abhängigkeit vom abgetasteten Indikator der Kassette die Umschaltung des Geschwindigkeitswechselgetriebes zum Antreiben des Anzeigeelementes eines Zählwerkes zum Anzeigen des der jeweils im Gerät des Systems fortbewegten Aufzeichnungsträgermenge entsprechenden Aufzeichnungsdauerwertes, so daß eine Anzeigeskala mit einer fix vorgegebenen Gesamtlänge zur Anzeige aller unterschiedlich großen Gesamtaufzeichnungsdauerwerte verwendet werden kann, wobei durch das automatische Anpassen an die unterschiedlichen Betriebszustände eine hohe Betriebssicherheit erreicht wird.

Als Geschwindigkeitswechselgetriebe können die verschiedensten Getriebearten , wie Riemengetriebe, Reibradgetriebe oder Zahnradgetriebe, verwendet werden. Als Zahnradgetriebe kann beispielsweise ein Kronenzahnradgetriebe vorgesehen sein, wie dies bei dem Gerät des aus der eingangs erwähnten DE-AS 19 03 185 bekannten Systems der Fall ist, das aber relativ aufwendig in der Herstellung ist. Als vorteilhaft hat sich bei einem System mit einem als Zahnradgetriebe ausgebildeten Geschwindigkeitswechselgetriebe erwiesen, wenn das Zahnradgetriebe eine der Anzahl von unterschiedlich großen Gesamtaufzeichnungsdauerwerten entsprechende Anzahl von zueinander koaxialen, hinsichtlich der erreichbaren Übersetzungsverhältnisse unterschiedlich ausgebildeten Getriebeteilen aufweist, die zum Umschalten des Zahnradgetriebes in axialer Richtung zwischen einer der Anzahl von unterschiedlich großen Gesamtaufzeichnungsdauerwerten entsprechenden Anzahl von Betriebsstellungen verstellbar sind und dabei mit mindestens einem ortsfesten Getriebeteil in Eingriff bringbar sind. Ein solches Zahnradgetriebe erfordert relativ wenig Aufwand bei dessen Herstellung.

In diesem Zusammenhang hat es sich weiters als vorteilhaft erwiesen, wenn die verstellbaren Getriebeteile durch Stirnzahnräder mit unterschiedlich großen Durchmessern gebildet sind, die mit zu diesen korrespondierenden, ebenfalls zueinander koaxialen ortsfesten Stirnzahnrädern in Eingriff bringbar sind. Ein solches Stirnzahnradgetriebe ist im Hinblick auf ein möglichst leichtgängiges, ungestörtes Ineingriffbringen der Getriebeteile beim Umschalten des Geschwindigkeitswechselgetriebes vorteilhaft.

In vorstehend angeführtem Zusammenhang hat es sich aber auch als vorteilhaft erwiesen, wenn die verstellbaren Getriebeteile durch von der Antriebseinrichtung her antreibbare Schnecken mit unterschiedlich großen Gangzahlen gebildet sind, die mit einem ortsfesten Schneckenrad in Eingriff bringbar sind, von dem her das Anzeigeelement antreibbar ist. Ein solches Schneckengetriebe ist im Hinblick auf eine hohe Geschwindigkeitsübersetzung mit dem umschaltbaren Geschwindigkeitswechselgetriebe vorteilhaft.

Die Abtasteinrichtung zum Abtasten des Indikators einer in das Gerät des erfingunsgemäßen Systems eingesetzten Kassette kann photoelektrisch ausgebildet oder mit elektrischen Schaltkontakten aufgebaut sein und über eine elektromechani sche Einrichtung die Umschaltung des Geschwindigkeitswechselgetriebes steuern. Die Abtasteinrichtung kann auch mechanisch ausgebildet sein und beispielsweise einen zweiarmigen Hebel aufweisen, der mit seinem einen Ende den Indikator abtastet und mit seinem anderen Ende die Umschaltung des Geschwindigkeitswechselgetriebes steuert. Im Zusammenhang mit einer mechanischen Abtasteinrichtung hat es sich als besonders vorteilhaft erwiesen, wenn die einschlägigen Kassetten mit einem mechanische mit der Abtasteinrichtung abtastbaren Indikator versehen sind und die Abtasteinrichtung zwei Hebel aufweist, die zumindest über eine Feder miteinander gekoppelt und mit der Feder in einer zueinander ausgerichteten Lage haltbar sind und von denen einer den Indikator abtasten und der andere die Umschaltung des Geschwindigkeitswechselgetriebes steuert. Auf diese Weise ist erriecht, das bei von der Verstellbewegung der Kassette beim Einsetzen derselben in das Gerät des Systems auf mechanische Weise direkt abgeleiteter Verstellbewegung zum Umschalten des Geschwindigkeitswechselgetriebes die Größe der Verstellkraft und die Zeitdauer des Wirksamseins der Verstellkraft zum Umschalten des Geschwindigkeitswechselgetriebes unabhängig von der Verstellbewegung der Kassettte und des von ihr vestellten Hebels ist und nur durch die Feder bestimmt ist. Hierdurch sind Beschädigungen des Geschwindigkeitswechselgetriebes beim Um-

3

schalten desselben vermeidbar.

Die meisten bekannten Kassetten besitzen zwei parallele Kassettenhauptwände, eine vordere und eine hintere schmale Kassettenwand und zwei seitliche schmale Kassettenwände. Ein erfindungsgemäßes System, das für solche Kassetten geeignet ist, kann dadurch gekennzeichnet sein, daß die Kassetten in zwei hinsichtlich der beiden Kassettenhauptwände zueinander gewendeten Betriebslagen in ein systemgemäßes Gerät einsetzbar sind, daß jeder der beiden Betriebslagen der Kassetten mindestens ein eigener Indikator an der Kassette zugeordnet ist und die den beiden Betriebslagen zugeordneten Indikatoren in zwei hinsichtlich der beiden Kassettenhauptwände zueinander gewendeten Positionen and der Kassette vorgesehen sind, daß das Gerät nur eine einzige Abtasteinrichtung aufweist und daß jeder der den beiden Betriebslagen zugeordneten Indikato ren mit der einzigen Abtasteinrichtung abtastbar ist. Bei einem solchen System ist die Kassette einfach ausgebildet und braucht das Gerät mit nur einer einzigen Abtasteinrichtung versehen sein.

Bevorzugt wird eine weitere Ausführungsform, die dadurch gekennzeichnet ist, daß die Indikatoren je durch eine Ausnehmung im Kassettengehäuse gebildet sind und jeder der Ausnehmungen sich bis zu einer Kassettenhauptwand und einer seitlichen schmalen Kassettenwand erstreckt. Hiedurch ist vorteilhafterweise erreicht, daß die Indikatoren von der Seite und von unten oder von oben abtastbar sind. Es besteht deshalb relativ viel Freiheit in der Ausbildung der Abtasteinrichtung.

In diesem Zusammenhang hat sich eine Ausführungsform als besonders vorteilhaft erwiesen, die dadurch gekennzeichnet ist, daß jede der Ausnehmungen in einem vorderen Eckenbereich des Kassettengehäuses vorgesehen ist und sich bis zu beiden Kassettenhauptwänden, einer seitlichen schmalen Kassettenwand und der vorderen schmalen Kassettenwand erstreckt, so daß die Kassette, in Richtung senkrecht auf die vorderen schamle Kassettenwand gesehen, in ihrem Vorderbereich zwei zueinander symmetrische seitliche Einschnürungen gegenüber dem übrigen Kassettengehäuse aufweist. Bei diesem System können die Indikatoren der Kassette von der Seite, sowohl von oben als auch von unten und zusätzlich von vorne abgetastet werden. Es besteht somit maximale Freiheit in der Ausbildung der Abtasteinrichtung. Ferner ist hiedurch erreicht, daß die Kassetten ein verkleinertes Volumen und eine entsprechend verkleinerte Masse aufweisen, weil die Kassette in ihrem Vorderbereich verschmälert ist. Die Kassetten des Systems sind ohne Schwierigkeiten, selbst im Dunkeln von Hand aus oder mittels automatischer Vorrichtungen, voneinander zu unterscheiden. Die Gehäuseverschmälerung ist nämlich einfach von Hand aus oder mit einem Fühler abtastbar und in der Ansicht leicht zu erkennen.

Weitere Vorteile sind mit einer Ausführungsform erreicht, die dadurch gekennzeichnet ist, daß die Kassetten zusätzlich an ihrer vorderen schmalen Kassettenwand zwei Löschsperr-Indikatoren aufweisen, die je einer der beiden zueinander ge wendeten Betriebslagen der Kassetten zugeordnet und in zwei hinsichtlich der beiden Kassettenhauptwände zueinander gewendeten Positionen an der Kassette vorgesehen sind, daß das Gerät nur eine weitere Abtasteinrichtung zum Abtasten der beiden Löschsperr-Indikatoren besitzt und daß beim Einsetzen einer Kassette in das Gerät durch Verschieben der Kassette parallel zu den Kassettenhauptwänden und mit der vorderen schmalen Kassettenwand voran die Indikatoren mit den beiden Abtasteinrichtungen abtastbar sind. Ein so ausgebildetes System ermöglicht eine einfache Verwendung auf kleinstem Raum bei gleichzeitiger Steuerung der wichtigsten Funktionen des Gerätes. Weil die einschlägigen Indikatoren sich an der Frontseite der Kassette befinden, braucht eine Kassette nur soweit in das Gerät eingeführt werden, als für das Antreiben des Aufzeichnungsträgers notwendig ist, und können die Abtasteinrichtungen so ausgebildet werden, daß sie in Richtung senkrecht zu den Kassettenhauptwänden praktisch keinen die diesbezüglichen Abmessungen der Kassetten übersteigenden Raumbedarf in Anspruch nehmen. Hiedurch ist die Möglichkeit einer beachtlichen Verkleinerung des Volumens und der Masse des Gerätes gegeben, was insbesondere bei Systemen mit tragbaren Geräten, wie tragbaren Diktiergeräten, von Bedeutung ist.

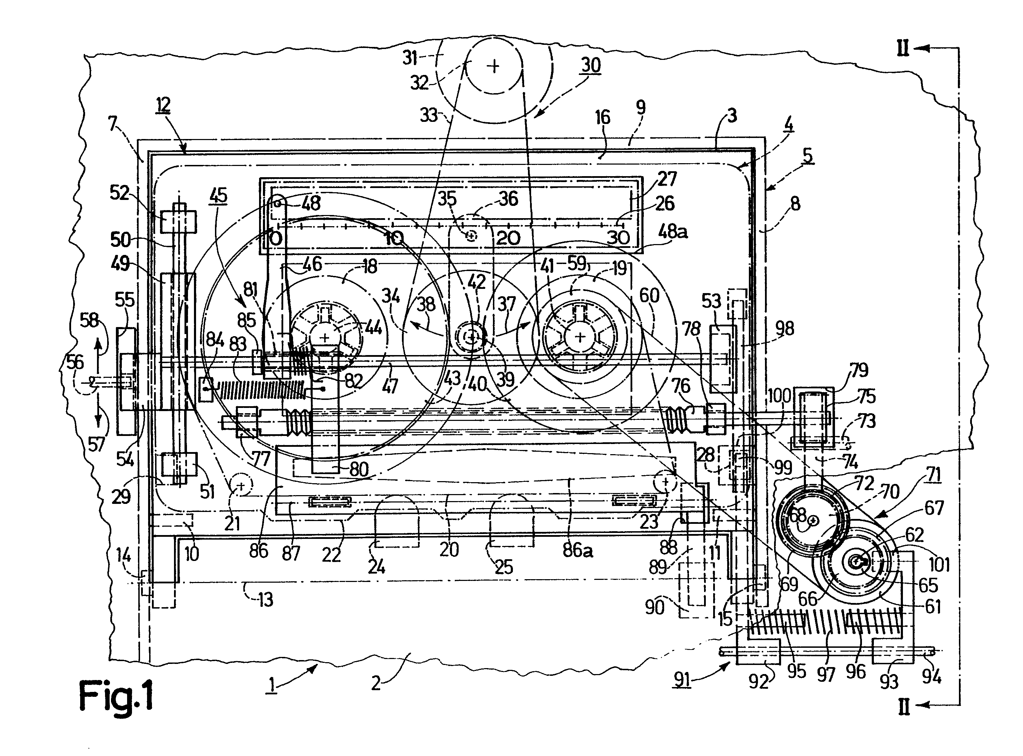

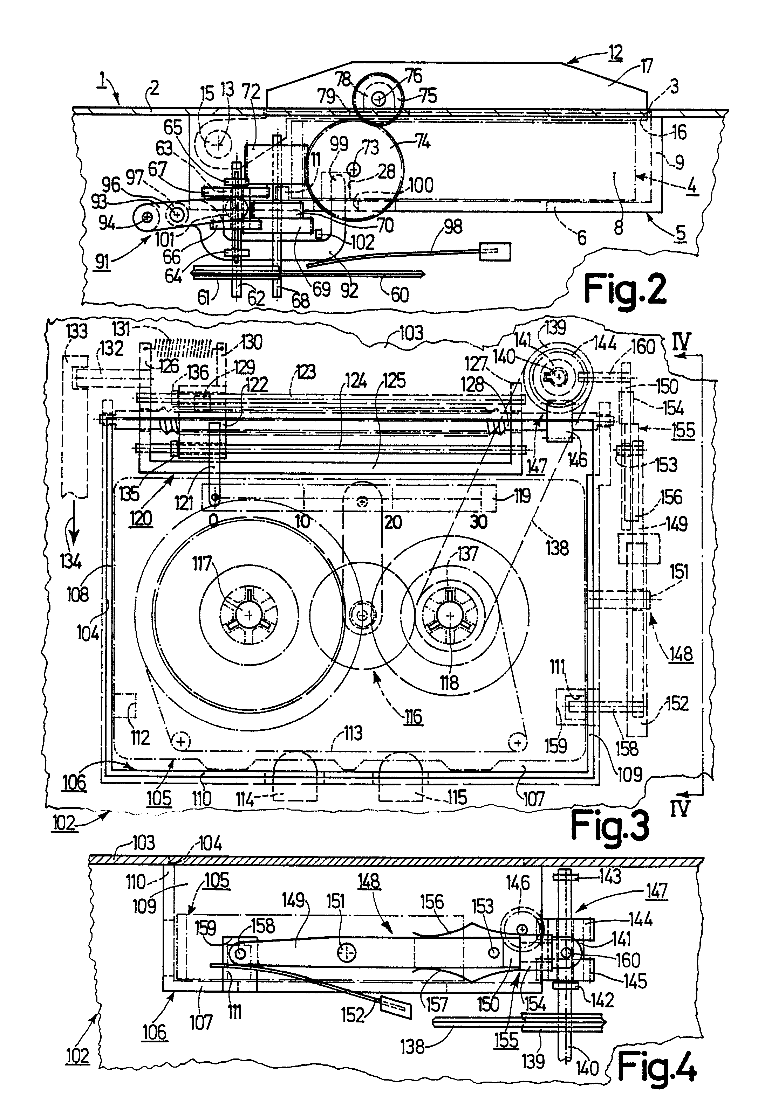

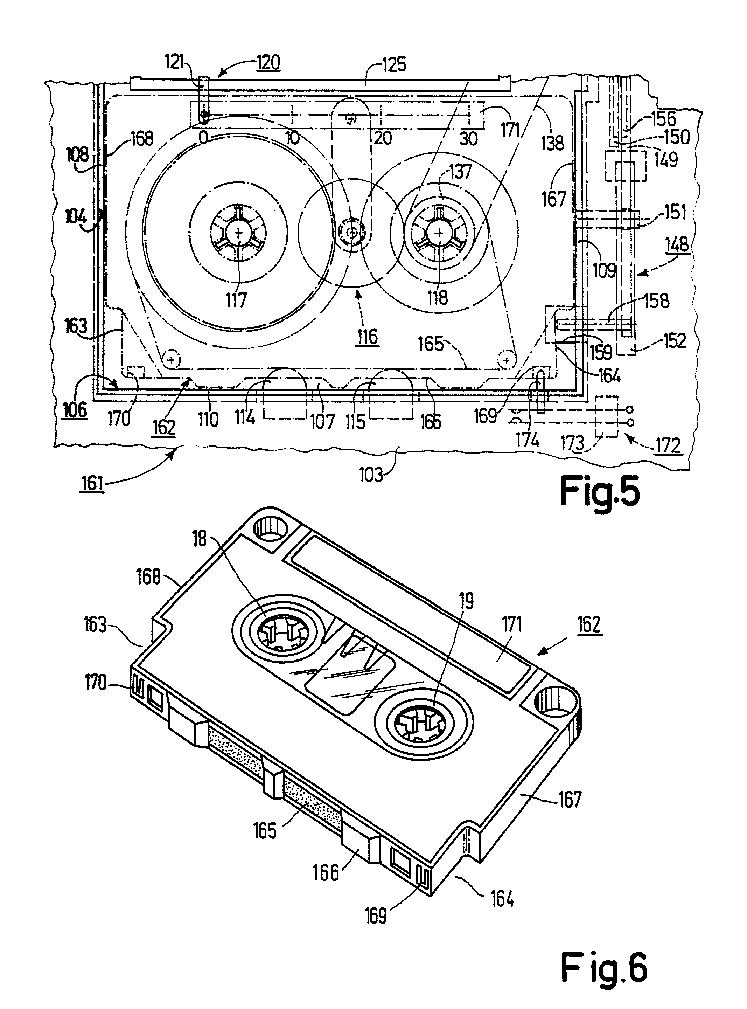

Die Erfindung wird im folgenden anhand von mehreren Ausführungsbeispielen, auf die sie jedoch nicht beschränkt sein soll, näher beschrieben. Die Fig. 1 zeigt schematisch in Draufsicht in etwa zweieinhalbfacher Vergrößerung den erfindungswesentlichen Teil eines ersten Systems, das ein als Taschendiktiergerät ausgebildetes Aufzeichnungs- und Wiedergabegerät und in Kassetten untergebrachte Magnetbänder als Aufzeichnungsträger umfaßt, wobei das Zählwerk des systemgemäßen Taschendiktiergerätes in einer Verschlußklappe für einen Kassettenaufnahmeraum untergebracht ist und das stufenweise umschaltbare Geschwindigkeitswechselgetriebe zum Antreiben des Anzeigeelementes des Zählwerkes als Stirnzahnradgetriebe ausgebildet ist. Die Fig.2 zeigt in einem Schnitt längs der Linie II-II in Fig.1 im wesentlichen das stufenweise umschaltbare Geschwindigkeitswechselgetriebe des Taschendiktiergerätes des Systems gemäß Fig.1 und eine Abtasteinrichtung, die einen an der systemgemäßen Kassette vorgesehenen Indikator zur Indikation des mit dem in dieser Kassette untergebrachten Magnetband erreichbaren Gesamtaufzeichnungsdauerwertes abtastet und in Abhängigkeit vom Indikator die Umschaltung des Geschwindigkeitswechselgetriebes steuert. Die Fig.3 zeigt schematisch in Draufsicht in etwa zweifacher Vergrößerung den erfindungswesentlichen Teil eines zweiten Systems, das ein als Tischdiktiergerät ausgebildetes Aufzeichnungs-und Wiedergabegerät und in Kassetten untergebrachte Magnetbänder als Aufzeichnungsträger umfaßt, wobei das Zählwerk des systemgemäßen Tischdiktiergerätes neben dem Kassettenaufnahmeraum in Gerät angeordnet ist und das stufenweise umschaltbare Geschwindigkeitswechselgetriebe zum Antreiben des Anzeigeelementes des Zählwerkes als Schneckengetriebe ausgebildet ist. Die Fig.4 zeigt in einem Schnitt längs der Linie IV-IV in Fig.3 im wesentlichen das stufenweise umschaltbare Geschwindigkeitswechselgetriebe des Tischdiktiergerätes des Systems gemäß Fig.3 und eine Abtasteinrichtung, die einen an der systemgemäßen Kassette vorgesehenen Indikator zur Indikation des mit dem in dieser Kassette untergebrachten Magnetband erreichbaren Gesamtaufzeichnungsdauerwertes abtastet und in Abhängigkeit vom Indikator die Umschaltung des Geschwindigkeitswechselgetriebes steuert. Die Fig.5 zeigt in gleicher Weise wie die Fig.3 eine drittes System, das ein als Tischdiktiergerät ausgebildetes Aufzeichnungs-und Wiedergabegerät und in Kassetten untergebrachte Magnetbänder als Aufzeichnungsträger umfaßt, wobei sowohl das Gerät als auch die Kassetten des Systems gemäß Fig.5 eine gegenüber dem Gerät und den Kassetten des Systems gemäß den Figuren 3 und 4 abgewandelte Ausbildung aufweisen. Die Fig.6 zeigt perspektivisch eine Kassette gemäß der in Fig.5 - schematisch dargestellten Ausführungsform in detaillierterer Darstellungsweise.

Das in den Figuren 1 und 2 teilweise dargestellte System umfaßt ein Taschendiktiergerät 1, das in seiner Gehäusedeckenwand 2 eine Öffnung 3 aufweist, durch die hindurch jeweils eine systemgemäße Kassette 4 in eine im wesentlichen wannenförmige Kassettenaufnahme 5 einsetzbar ist. Die Kassettenaufnahme 5 ist von einer Bodenwand 6, einer ersten Seitenwand 7, einer zweiten Seitenwand 8, einer Rückwand 9 und zwei Vorderwandabschnitten 10 und 11 begrenzt, gegen die eine eingesetzte Kassette durch eine an derselben angreifende, nicht dargestellte Feder gedrückt wird. Zum Verschließen der Kassettenaufnahme 5 weist das Gerät 1 eine Verschlußklappe 12 auf, die um eine Achse 13 schwenkbar ist, die durch zwei je in einer Verlängerung der beiden Seitenwände 7 und 8 drehbar gelagerte Wellenstummel 14 und 15 festgelegt ist. Der Verschlußklappe 12 steht unter der Wirkung einer nicht dargestellten Totpunktfederanordnung, die die Verschlußklappe 12 sowohl in ihrer in den Figuren 1 und 2 dargestellten Schließstellung als auch in ihrer Offenstellung hält. in der die Verschlußklappe gegenüber der Gehäusedeckenwand 2 einen Winkel von nahezu 90° einnimmt. Die Verschlußklappe 12 besteht aus einer Bodenplatte 16 und einer auf diese aufgesetzte Abdeckwanne 17, die aber der Deutlichkeit der Zeichnung halber in Fig.1 nicht dargestellt ist.

Wie vorstehend erläutert, ist das Gerät 1 zur Aufnahme von jeweils einer Kassette 4 ausgebildet, die in den Figuren 1 und 2 mit einer strichpunktierten Linie angedeutet ist und die in zwei zueinander gewendeten Betriebslagen in das Gerät einsetzbar ist. Jede Kassette 4 weist ein quaderförmiges Gehäuse auf und bestizt zwei parallele Kassettenhauptwände, eine vordere und eine hintere - schamle Kassettenwand und zwei seitliche schamle Kassettenwände. In jeder Kassette 4 sind zwei nebeneinanderliegende Wickelkerne 18 und 19 drehbar gelagert und ist ein Magnetband 20 untergebracht, das von dem Wickelkern 18 über eine Bandführung 21 und entlang der vorderen - schmalen Kassettenwand 22 sowie über eine weitere Bandführung 23 zu dem Wickelkern 19 geführt ist. In der vorderen schmalen Kassettenwand 22 sind zwei Durchbrüche vorgesehen, durch die hindurch je ein Magnetkopf, nähmlich ein Löschkopf 24 und eine Aufzeichnungs-und Wiedergabekopf 25, hindurchgeführt ist. Die Magnetköpfe 24 und 25 tasten in den beiden hinsichtlich der beiden Kassettenhauptwände zueinander gewendeten Betriebslagen jeder Kassette 4 je eine Spur, insgesamt also zwei gegenläufig abtastbare Spuren, durch die Durchbrüche in der Kassettenschmalseite 22 hindurch ab.

In das Gerät 1 sind Kassetten zweier unterschiedlicher Kassettentypen einsetzbar. Die Kassetten der beiden Kasset tentypen unterscheiden sich hinsichtlich des Durchmessers ihrer Wickelkerne und der Gesamtlänge der Magnetbänder darin. Aufgrund der unterschiedlichen Gesamtlänge der Magnetbänder sind mit denselben unterschiedlich große Gesamtaufzeichnungsdauerwerte erreichbar. Bei der in Fig.1 dargestellten Kassette 4 gemäß einem ersten Kassettentyp ist ein Gesamtaufzeichnungsdauerwert von dreißig Minunten pro Betriebslage der Kassette, also pro Spur am Magnetband erreichbar. Um dies anzuzeigen, weist die Kassette 4 an ihren beiden Hauptwänden je eine Anzeigeskala 26 mit einer vorgegebenen Gesamtlänge auf. deren Endpunkte mit "0" bzw. "30" bezeichnet sind. Neben der Anzeigeskala 26 ist eine Anzeigestreifen 27 aus einem magnetisch orientierbare Partikel enthaltenden Material angebracht. Zur Indikation des mit dem in der Kassette 4 untergebrachten Magnetband erreichbaren Gesamtaufzeichnungsdauerwertes weist die Kassette 4 zwei Indikatoren 28 und 29 auf, die je einer der beiden zueinander gewendeten Betriebslagen der Kassette 4, also je einer Spur am Magnetband zugeordnet sind. Die Indikatoren 28 und 29 sind in zwei hinsichtlich der beiden Kassettenhauptwände zueinander gewendeten Positionen an der Kassette vorgesehen und je durch eine Ausnehmung im Kassettengehäuse gebildet, wobei jede Ausnehmung sich bis zu einer Kassettenhauptwand und einer seitlichen schmalen Kassettenwand erstreckt. In das Gerät 1 ist, wie erwähnt, auch je eine Kassette gemäß einem zweiten Kassettentyp einsetzbar, bei der mit dem Magnetband ein Gesamtaufzeichnungsdauerwert von fünfzehn Minuten pro Betriebslage der Kassette, also pro Spur am Magnetband erreichbar ist. Um dies anzuzeigen, weisen die Kassetten gemäß dem zweiten Kassettentyp an ihren beiden Hauptwänden auch je eine Anzeigeskala auf, deren Gesamtlänge mit der vorgegebenen Gesamtlänge der Anzeigeskala 26 an den Kassetten 4 gemäß dem ersten Kassettentyp übereinstimmt und deren Endpunkte mit "0" bzw. "15" bezeichnet sind. Die Kassetten des zweiten Kassettentyps weisen als Indikatoren zur Indikation des mit dem in denselben untergebrachten Magnetband erreichbaren Gesamtaufzeichnungsdauerwertes keine Ausnehmungen 28 und 29 auf, sondern bei diesem zweiten Kassettentyp sind in dem Bereich, in dem beim ersten Kassettentyp die Ausnehmungen 28 und 29 vorgesehen sind, die Kassettenhauptwände und die seitlichen schmalen Kassettenwände durchgehend ausgebildet, so daß die durchgehenden Kassettenwände die Indikatoren bilden.

Um ein Magnetband im Gerät fortzubewegen und an den Magnetköpfen 24 und 25 entlang zu transportieren, wobei die Magnetköpfe eine Spur abtasten und aufgezeichnete Sprachsignale mit dem Löschkopf 24 löschbar und mit dem Aufzeichnungs-und Wiedergabekopf 25 Sprachsignale aufzeichenbar bzw. wiedergebbar sind, ist im Gerät 1 eine Antriebseinrichtung 30 für das Magnetband vorgesehen. Die Antriebseinrichtung 30 weist einen Motor 31 auf, mit dem ein auf seine Motorwelle aufgesetztes erstes Pesenrad 32 antreibbar ist, von dem eine erste Pese 33 zu einem zweiten Pesenrad 34 geführt ist. Das zweite Pesenrad 34 ist auf einem um eine gerätefeste Achse 35 schwenkbaren Lagerbock 36 drehbar gelagert, der aus seiner in Fig.1 dargestellten Mittelposition, die er in der Betriebsart "Stop" einnimmt, in entgegengesetzten Richtungen, die mit den Pfeilen 37 und 38 angegeben sind, in zwei Betriebspositionen verschwenkbar ist. Dieses Verschwenken des Lagerbockes 36 wird mit einem nicht dargestellten, von Hand aus verstellbaren Betriebsartenschieber vorgenommen. Durch Verschwenken des Lagerbockes 36 in Richtung des Pfeiles 37 in seine erste Betriebsposition ist eine mit dem zweiten Pesenrad 34 drehfest verbundene Antriebswelle 39 mit einem Reibrad 40 in Antriebsverbindung bringbar. Mit dem Reibrad 40 ist ein erster Wikkeldorn 41 drehfest verbunden, der durch eine Öffnung in der Bodenwand 6 der Kassettenaufnahme 5 hindurch in den Kassettenaufnahmeraum hineinragt und der mit dem Wickelkern 19 in Antriebsverbindung steht. Durch Verschwenken des Lagerbockes 36 in Richtung des Pfeiles 38 in seine zweite Betriebsposition ist ein auf die Antriebswelle 37 aufgesetztes, mit derselben und dem zweiten Pesenrad 34 drehfest verbundenes Ritzel 42 mit einem Zahnrad 43 in Eingriff bringbar. Mit dem Zahnrad 43 ist ein zweiter Wickeldorn 44 drehfest verbunden, der durch eine Öffnung in der Bodenwand 6 der Kassettenaufnahme 5 hindurch in den Kassettenaufnahmeraum hineinragt und der mit dem Wickelkern 18 in Antriebsverbindung steht. In der ersten Betriebsposition des Lagerbockes 36 ist vom Motor 31 über das erste Pesenrad 32, die Pese 33, das zweite Pesenrad 34, die Antriebswelle 39, das Reibrad 40, den Wickeldorn 41 und den Wickelkern 19, das Magnetband 20 in den Betriebsarten "Normaler Vorlauf" bzw. "Schneller Vorlauf", dies je nach gewählter Motorgeschwindigkeit, antreibbar und dadurch im Gerät fortbewegbar und auf den Wickelkern 19 aufwickelbar. In der zweiten Betriebsposition des Lagerbockes 36 ist vom Motor 31, dessen Drehrichtung hiebei gegenüber der zuvor beschriebenen Antriebsverbindung umgekehrt ist, über das erste Pesenrad 32, die Pese 33, das zweite Pesenrad 34, die Antriebswelle 39, das Ritzel 42, das Zahnrad 43, den Wickeldorn 44 und den Wikkelkern 18 das Magnetband 20 in der Betriebsart "Schneller Rücklauf" antreibbar und dadurch im Gerät fortbewegbar und auf den Wickelkern 18 aufwickelbar.

Für den Benützer eines solchen Systems ist es vorteilhaft zu wissen, wieviel Magnetband einer Kassette nach dem Einsetzen derselben in das systemgemäße Gerät, wobei sich die gesamte Magnetbandmenge auf dem Wickelkern 18 befindet, im Gerät fortbewegt wurde. Deshalt weist das Gerät 1 zum Anzeigen des der jeweils im Gerät fortbewegten Magnetbandmenge entsprechenden Aufzeichnungsdauerwertes ein Zählwerk 45 auf. Das Zählwerk 45 ist bei vorliegendem Taschendiktiergerät in der Verschlußklappe 12 untergebracht und weist ein beim Fortbewegen des Magnetbandes 20 angetriebenes Anzeigeelement auf, das entlang der an der Kassette 4 vorgesehenen Anzeigeskala 26 wandert. Dieses Anzeigeelement ist durch einen fingerförmigen Zeiger 46 gebildet, der auf einer Führungsstange 47 verschiebbar geführt ist und der an seinem freien Enden einen kleinen Stabmagneten 48 trägt, der durch eine Öffnung 48a in der Bodenplatte 16 der Verschlußklappe 12 hindurch mit dem magnetisch orientierbare Partikel enthaltenden Anzeigestreifen 27 in Berührung steht, so daß beim Entlangwandern des Zeigers 46 entlang der Anzeigeskala 26 der Stabmagnet 48 auf dem Anzeigestreifen 27 durch Orientierung der magnetisch orientierbaren Partikel einen Dauerstrich zeichnet.

Die Führungsstange 47 des Zählwerkes 45 ist an einem Ende fest mit einem Block 49 verbunden, der seinerseits auf einer weiteren Führungsstange 50 verschiebbar geführt ist, die senkrecht zur Führungsstange 47 angeordnet ist und die von zwei an der Bodenplatte 16 angebrachten Halterungen 51 und 52 festgehalten ist. Das andere Ende der Führungsstange 47 ist in einem an der Bodenplatte 16 angebrachten Führungsblock 53 senkrecht zur Richtung der Führungsstange 47 verschiebbar geführt. Mit dem Block 49 ist ein L-förmig abgewinkelter Lappen 54 verbunden, dessen gabelförmig ausgebildetes freies Ende durch einen. Durchbruch 55 in der Gehäusedeckenwand 2 in das Geräteinnere hineingeführt ist. Im Geräteinneren ist das gabelförmige Ende des Lappens 54 mit einem Stift 56 einer weiter nicht dargestellten, von Hand aus betätigbaren Verstelleinrichtung gekuppelt, mit der der Block 49 und somit auch die Führungsstange 47 und damit der Zeiger 46 aus seiner in Fig.1 dargestellten Mittelposition in Richtung der beiden Pfeile 57 und 58 verstellbar ist. Bei diesen beiden Verstellbewegungen zeichnet der Dauermagnet 48 von dem erwähnten Dauerstrich am Anzeigestreifen 27 quer abstehende Markierstriche auf den Anzeigestreifen 27. Die erwähnten Verstellbewegungen werden dann von Hand aus ausgelöst, wenn bestimmte Diktatstellen am Magnetband gekennzeichnet werden sollen, etwa zu korrigierende Diktatstellen bzw. das Ende von Diktaten. Die auf den Anzeigestreifen 27 gezeichneten Markierstriche geben dann die Lage dieser bestimmten Diktatstellen am Magnetband 20 an. Zu erwähnen ist noch, daß beim Schließen der Verschlußklappe 12 der Stift 56 selbsttätig mit dem gabelförmigen Ende des Lappens 54 gekuppelt wird.

Der als Anzeigeelement vorgesehene Zeiger 46 ist von der Antriebseinrichtung 30 für das Magnetband 20 her antreibbar. Hiefür ist mit dem zum Wickeldorn 41 koaxialen Reibrad 40 ein drittes Pesenrad 59 drehfest verbunden, von dem über eine zweite Pese 60 ein viertes Pesenrad 61 antreibbar ist. Das vierte Pesenrad 61 ist drehfest mit einer im Gerät drehbar gelagerten ·Welle ·62 verbunden. Auf der Welle 62 ist eine Hülse 63 drehfest und in axialer Richtung zwischen zwei Anschlägen 64 und 65 verschiebbar angebracht. Dies wird durch eine Steg-Nut-Verbindung zwischen der Welle 62 und der Hülse 63 erreicht. Mit der Hülse 63 sind an deren Enden ein erstes Stirnzahnrad 66 und eine zweites Stirnzahnrad 67 drehfest verbunden, die somit koaxial zueinander angeordnet sind und zwischen zwei Betriebsstellungen in axialer Richtung verstellbar sind. Mit einer weiteren im Gerät drehbar gelagerten Welle 68 sind ein drittes Stirnzahnrad 69 und ein viertes Stirnzahnrad 70 fest verbunden, die im Gerät nicht axial verschiebbar, sondern ortsfest sind. Bei der in den Figuren 1 und 2 dargestellten ersten Betriebsstellung der Stirnzahnräder steht das erste Stirnzahnrad 66 mit dem dritten Stirnzahnrad 69 in Eingriff. Bei der nicht dargestellten zweiten Betriebsstellung der Stirnzahnräder steht das zweite Stirnzahnrad 67 mit dem vierten Stirnzahnrad 70 in Eingriff.

Die vier Stirnzahnräder 66, 67, 69 und 70 bilden ein stufenweise umschaltbares Stirnzahnradgetriebe 71, das als Geschwindigkeitswechselgetriebe vorgesehen ist und das korrespondierend zu den unterschiedlich großen Gesamtaufzeichnungsdauerwerten auf unterschiedlich große Geschwindigkeitsübersetzungen schaltbar ist. Dabei sind die Stirnzahnräder hinsichtlich der erreichbaren Übersetzungsverhältnisse unterschiedlich ausgebildet, und zwar sind die Durchmesser der Stirnzahnräder so gewählt, daß die Geschwindigkeitsübersetzungen des Geschwindigkeitswecheselgetriebes 71 zu den korrespondierenden Gesamtaufzeichnungsdauerwerten umgekehrt proportional sind. Hiedurch ist erreicht, daß mit der vorgegebenen Gesamtlänge der Anzeigeskala an den systemgemäßen Kassetten beide durch die jeweilige Luange des betreffenden Magnetbandes bestimmten Gesamtaufzeichnungsdauerwerte anzeigbar sind. Ein solches Stirnzahnradgetriebe ist billig, einfach herstellbar und einfach und leichtgängig umschaltbar.

Mit der drehbaren Welle 68 ist weiters eine Schnecke 72 fest verbunden, die ständig mit einem um eine gerätefeste Welle 73 drehbaren Schneckenrad 74 in Eingriff steht. Mit einem solchen Schneckengetriebe ist bekanntlich eine sehr hohe Übersetzung erreichbar, so daß trotz relativ großen Magnetbandlängen mit einer relativ kleinen Anzeigeskalenlänge das Auslangen gefunden wird. Mit dem Schneckenrad 74 ist ein Zahnrad 75 antreibbar, das an einem Ende einer aus der Verschlußklappe 12 herausragenden Antriebsspindel 76 drehfast befestigt ist, die in zwei an der Bodenplatte 16 angebrachten Lagerböchen 77 und 78 drehbar gelagert ist. Beim Schließen der Verschlußklappe 12 kommt das Zahnrad 75 durch einen Durchbruch 79 in der Gehäusedeckenwand 2 hindurch selbsttätig mit dem Schneckenrad 74 in Eingriff, so daß danach die An triebsverbindung zum Antreiben des Zeigers 46 hergestellt ist. Mit dem Gewindeteil der Antriebsspindel 76 steht über einen nicht sichtbaren Mitnehmerzahn ein auf der Führungsstange 47 verschiebbar geführter, den Mitnehmerzahn aufweisender Mitnehemerblock 80 in Antriebsverbindung. Zur verschiebbaren Führung des Zeigers 46 und des Mitnehmerblockes 80 an der Führungsstange 47 sind die beiden auf eine entlang der Führungsstange 47 verschiebbare Hülse 81 aufgesetzt. Zwischen dem Mitnehmerblock 80 und dem Zeiger 46 ist eine Schraubendrehfeder 82 vorgesehen, die ebenfalls auf die Hülse 81 aufgesetzt ist und die mit ihren beiden Enden den Mitnehmerblock 80 und den Zeiger 46 zur Bodenplatte 16 hin niederhält, so daß der Mitnehmerzahn des Mitnehmerblockes 80 mit dem Gewindeteil der Antriebsspindel 76 in Eingriff gehalten bleibt und der Dauermagnet 48 am Zeiger 46 gegen den Anzeigestreifen 27 niedergehalten bleibt. An dem Mitnehmerblock 80 greift weiter eine Zugfeder 83 an, die andererseits an einem an der Bodenplatte 16 angebrachten Lappen 84 befestigt ist und die als Rückstellfeder zum Rückstellen des Zeigers 46 und des Mitnehmerblockes 80 in seine in Fig.1 dargestellten Ausgangslage vorgesehen ist. Diese Ausgangslage ist durch einen Anschlag 85 festgelegt, der an der Führungsstange 47 angebracht ist und an dem sich der Zeiger 46 abstützt.

Beim Antreiben und Fortbewegen des Magnetbandes 20 wird synchron zum Magnetband über das dritte Pesenrad 59, die Pese 60, das vierte Pesenrad 61, das als Stirnzahnradgetriebe ausgebildete Geschwindigkeitswechselgetriebe 71, die Schnecke 72, das Schneckenrad 74, das Zahnrad 75, die Antriebsspindel 76, den Mitnehmerblock 80 und die Hülse 81 auch der Zeiger 46 angetrieben, wobei der Zeiger entlang der Anzeigeskala 26 wandert. Dabei ist die Übersetzung der gesamten Antriebskette und insbesondere die Übersetzung des Geschwindigkeitswechselgetriebes 71 bei dem in den Figuren 1 und 2 dargestellten Betriebsfall, wobei eine Kassette gemäß dem ersten Kassettentyp mit einem Gesamtaufzeichnungsdauerwert von dreißig Minuten pro Spur in das Gerät eingesetzt ist, so gewählt, daß, nachdem das gesamte Magnetband vom Wickelkern 18 auf den Wickelkern 19 umgewickelt ist, der Zeiger 46 bei der mit "30" bezeichneten Stelle der Anzeigeskala 27 angelangt ist.

Gegen Ende eines Öffnungsvorganges der Verschlußklappe 12 wird die Rückstellung des Zeigers 46 in seine in Figur 1 dargestellten Ausgangslage bewirkt. Hiefür ist an der Bodenplatte 16 der Verschlußklappe 12 eine Auslöseplatte 86 mittels zweier von derselben abstehender, in Öffnungen der Bodenplatte hineinragender Lappen um eine Achse 87 schwenkbar gelagert. Die Auslöseplatte 86 untergreift den Mitnehmerblock 80 stets, und zwar unabhängig von seiner momentanen Position.Die Auslöseplatte 86 weist einen von derselben abstehenden, durch eine Öffnung 88 in der Bodenplatte 16 in das Geräteinnere ragenden, sichelförmig ausgebildeten Lappen 89 auf. Im geschlossenen Zustand der Verschlußklappe 12 stützt sich der Lagen 89 an einer Auflauframpe 90 im Gerät ab, wobei die Auslöseplatte 86 entgegen der Kraft einer zwischen ihr und der Bodenplatte 16 liegenden Blattfeder 86a zur Bodenplatte 16 hingedrückt wird. Beim Öffnen der Verschlußklappe 12 gleitet der Lappen 89 von der Auflauframpe 90 herunter, wobei dann die Auslöseplatte 86 mit der Kraft der Blattfeder 86a von der Bodenplatte 16 weggeschwenkt wird.Dabei stößt eidie Auslöseplatte 86 gegen den Mitnehmerblock 80 und verschwenkt diesen um die Führungsstange 47 entgegen der Kraft der Schraubendrehfeder 82, so daß der Mitnehmerzahn am Mitnehmerblock 80 außer Eingriff vom Gewindeteil der Antriebsspindel 76 kommt. Dadurch kann die Rückstellfeder 83 den Mitnehmberblock 80 samt dem Zeiger 46 in ihre Ausgangslage zurückverstellen, wobei der Mitnehmerblock 80 entlang der Auslöseplatte 86 gleitet.

Zum Abtasten der vorstehend beschriebenen, mechanisch abtastbaren Indikatoren zur Indikation der Gesamtaufzeichnungsdauerwerte pro Spur, der mit dem in einer in das Gerät eingesetzten Kassette untergebrachten Magnetband erreichbar ist, ist im Gerät nur eine einzige Abtasteinrichtung 91 vorgesehen. Die Abtasteinrichtung 91 weist einen ersten Hebel 92 und einen zweiten Hebel 93 auf, die voneinander unabhängig um eine gerätefeste Welle 94 schwenkbar gelagert sind. In die beiden Hebel 92 und 93 ist je ein Stift 95 bzw. 96 eingesetzt, die zueinander ausgerichtet sind und auf die eine gewundene Drahtfeder 97 aufgesetzt ist, so daß die beiden Hebel 92 und 93 über die Drahtfeder 97 miteinander gekoppelt und mit der Drahtfeder in einer zueinander ausgerichteten Lage haltbar sind. An dem ersten Hebel 92 greift eine im Gerät eingespannte Blattfeder 98 an, die den Hebel 92 in Richtung zur Kassettenaufnahme 5 hin belastet. Der erste Hebel 92 tastet je nach Betriebslage der in die Kassettenaufnahme 5 eingesetzten Kassette einen der beiden Indikatoren 28 und 29 ab. Hiefür ragt das freie Ende 99 des ersten Hebels 92 durch eine Öffnung 100 in der Bodenwand 6 der Kassettenaufnahme 5 hindurch in den Kassettenaufnahmeraum hinein und tastet dort den betreffenden Indikator ab. Im dargestellten Fall ist dies der Indikator 28. Der zweite Hebel 93 steuert die Umschaltung des Geschwindigkeitswechselgetriebes 71. Hiefür trägt der zweite Hebel 93 an seinem freien Enden einen zylindrischen Fortsatz 101, der zwischen das erste Stirnzahnrad 66 und das zweite Stirnzahnrad 67 ragt, so daß beim Verschwenken des zweiten Hebels die beiden Stirnzahnräder 66 und 67 des Geschwindigkeitswechselgetriebes 71 in axialer Richtung verstellt werden. Auf diese Weise ist erreicht, daß die Abtasteinrichtung 91 die Umschaltung des Geswindigkeitswechselgetriebes 71 zum Antreiben des Zeigers 46 in Abhängigkeit vom abgetasteten Indikator an der Kassette steuert. Somit ist auf einfache Weise stets für ein richtiges Umschalten des Geschwindigkeitswechselgetriebes gesorgt, so daß Fehlanzeigen mit dem Zählwerk mit Sicherheit ausgeschlossen sind.

Wenn eine Kassette gemäß dem ersten Kassettentyp in das Gerät eingesetzt wird, mit dessen Magnetband ein Gesamtaufzeichnungsdauerwert von dreißig Minunten pro Spur erreichbar ist, dann tritt das freie Ende 99 des ersten Hebles 92 je nach Betriebslage der Kassette in die als Indikator vorgesehene Ausnehmung 28 bzw. 29 ein, so daß dann der erste Hebel 92 in seiner in den Figuren 1 und 2 dargestellten Lage verbleibt, in die er durch die Blattfeder 98 gehalten und in der er sich an einem nur in Fig.2 dargestellten gerätefesten Anschlag 102 abstützt. Über die Drahtfeder 97 wird der zweite Hebel 93 in der zum ersten Hebel 92 ausgerichteten Lage gehalten, wie dies aus Fig.2 ersichtlich ist, wobei über den zylindrischen Fortsatz 101 das erste Stirnzahnrad 66 und das zweite Stirnzahnrad 67 in ihrer in Fig.2 dargestellten ersten Betriebstellung gehalten werden. Wenn eine Kassette gemäß dem zweiten Kassettentyp in das Gerät eingesetzt wird, mit dessen Magnetband ein Gesamtaufzeichnungsdauerwert von fünfzehn Minuten pro Spur erreichbar ist, dann wird das freie Ende 99 des ersten Hebels 92 von der unteren Hauptwand dieser Kassette entgegen der Kraft der Blattfeder 98 verstellt, so daß der erste Hebel 92 gemäß Fig. 2 im Uhrzeigersinn in eine Lage verschwenkt wird, in der sich das freie Ende 99 an der unteren Kassettenhauptwand abstützt. Über die Drahtfeder 97 wird der zweite Hebel 93 ebenfalls im Uhrzeigersinn verschwenkt, da die Drahtfeder danach trachtet, den ersten Hebel 92 und den zweiten Hebel 93 in einer zueinander ausgerichteten Lage zu halten, wobei der zylindrische Fortsatz 101 die beiden Stirnzahnräder 66 und 67 in axialer Richtung in ihre zweite Betriebsstellung verschiebt, in der das zweite Stirnzahnrad 67 mit dem vierten Stirnzahnrad 70 in Eingriff steht. Aufgrund der Ausbildung des umschaltbaren Geschwindigkeitswechselgetriebes als Stirnzahnradgetriebe erfolgt das Ineingriffbringen der Getriebeteile beim Umschalten besonders einfach und leichtgängig. Die Übersetzung zwischen dem zweiten Stirnzahnrad 67 und dem vierten Stirnzahnrad 70 ist genau doppelt so groß wie die Übersetzung zwischen dem ersten Stirnzahnrad 66 und dem dritten Stirnzahnrad 69. Damit ist erreicht, daß bei in das Gerät eingesetzter Kassette gemäß dem zweiten Kassettentyp die Schnecke 72 und die nachfolgenden Getriebeteile genau doppelt so - schnell angetrieben werden wie bei in das Gerät eingesetzter Kassette gemäß dem ersten Kassettentyp, so daß beim vorliegenden System mit der vorgegebenen Gesamtlänge der Anzeigeskala beide Gesamtaufzeichnungsdauerwerte von dreißig Minuten bzw. fünfzehn Minunten anzeigbar sind.

Das in den Figuren 3 und 4 teilweise dargestellte System umfaßt ein Tischdiktiergerät 102, das in einer Gehäusedeckenwand 103 eine Öffnung 104 aufweist, durch die hindurch jeweils eine systemgemäße Kassette 105 in eine im wesentlichen wannenförmige Kassettenaufnahme 106 einsetzbar ist. Die Kassettenaufnahme 106 ist von einer Bodenwand 107, einer ersten Seitenwand 108, einer zweiten Seitenwand 109 und einer Vorderwand 110 begrenzt, gegen die eine eingesetzte Kassette durch eine an derselben angreifende, nicht dargestellte Feder gedrückt wird. Die Öffnung 104 ist mit einer verschwenkbaren Verschlußklappe verschließbar, die aber der Einfachheit halber nicht dargestellt ist.

In das Tischdiktiergerät 102 ist ebenso wie in das Taschendiktiergerät gemäß den Figuren 1 und 2 jeweils eine Kassette in zwei hinsichtlich der beiden Kassettenhauptwände zueinander gewendeten Betriebslagen einsetzbar. Die Kassette 105, die in den Figuren 3 und 4 mit strichpunktierten Linien angegeben ist, weist im wesentlichen denselben Aufbau wie die in den Figuren 1 und 2 dargestellte Kassette 4 auf, nur sind die auch als Ausnehmungen im Kassettengehäuse ausgebildeten Indikatoren 111 und 112 an etwas anderer Stelle am Kassettengehäuse vorgesehen und sind an den Kassettenhauptwänden keine Anzeigestreifen aus magnetisch orientierbare Partikel enthaltendem Material vorgesehen. Mit dem Magnetband 113 in der Kassette 105 wirken ein Löschkopf 114 und ein Aufzeichnungs-und Wiedergabekopf 115 zusammen, die beide je durch einen Durchbruch in der Vorderwand 110 der Kassettenaufnahme 106 hindurchragen. Zum Antreiben und Fortbewegen des Magnetbandes 113 weist das Gerät 102 eine Antriebseinrichtung 116 auf, mit der die beiden Wickeldorne 117 bzw. 118 wahlweise antreibbar sind und die denselben Aufbau aufweist, wie jene des Taschendiktiergeräte gemäß den Figuren 1 und 2, so daß eine detaillierte Beschreibung der Antriebseinrichtung 116 unterbleiben kann.

In das Tischdiktiergerät 102 sind ebenso wie in das Taschendiktiergerät gemäß den Figuren 1 und 2 Kassetten zweier unterschiedlicher Kassettentypen einsetzbar, wobei mit dem in einer Kassette gemäß einem ersten Kassettentyp untergebrachten Magnetband pro Spur, also pro Betriebslage der Kassette ein Gesamtaufzeichnungsdauerwert von dreißig Minuten und mit dem in einer Kassette gemäß einem zweiten Kassettentyp untergebrachten Magnetband pro Spur, also pro Betriebslage der Kassette ein Gesatmaufzeichnungsdauerwert von fünfzehn Minuten erreichbar ist. Eine Kassette gemäß dem ersten Kassettentyp ist in den Figuren 3 und 4 dargestellt. Diese Kassette weist zur Indikation des Gesamtaufzeichnungsdauerwertes von dreißig Minuten pro Betriebslage der Kassette, also pro Spur am Magnetband die beiden als Ausnehmungen im Kassettengehäuse ausgebildeten Indikatoren 111 und 112 auf, die je einer Spur zugeordnet sind. Weiters weist diese Kassette an ihren beiden Hauptwänden je eine Anzeigeskala 119 mit einer vorgegebenen Gesamtlänge auf, deren Endpunkte mit "0" bzwl. "30" bezeichnet sind. Die Kassetten gemäß dem zweiten Kassettentyp weisen keine solche Ausnehmungen als Indikatoren auf, sondern die Kassettenwände sind in dem Bereich, in dem die Kassetten gemäß dem ersten Kassettentyp die Ausnehmungen aufweisen, durchgehend ausgebildet, so daß die durchgehenden Kassettenwände die Indikatoren zur Indikation des Gesamtaufzeichnungsdauerwertes von fünfzehen Minuten pro Betriebslage der Kassette, also pro Spur am Magnetband bilden. Weiters weisen die Kassetten des zweiten Kassettentyps an ihren beiden Hauptwänden auch je eine Anzeigeskala auf, deren Gesamtlänge mit der vorgegebenen Gesamtlänge der Anzeigeskala 119 an den Hauptwänden der Kassetten des ersten Kassettentyps übereinstimmt und deren Endpunkte mit "0" bzw. "15" bezeichnet sind.

Das Tischdiktiergerät 102 weist zum Anzeigen des der jeweils im Gerät fortbewegten Magnetbandmenge entsprechenden Aufzeichnungsdauerwertes ein Zählwerk 120 auf, das neben dem Kassettenaufnahmeraum der Kassettenaufnahme 106 angeordnet ist. Das Zählwerk 120 weist einen beim Forbewegen des Magnetbandes entlang der Anzeigeskala 119 wandernden Zeiger 121 auf, der auf einem Mitnehmerblock 122 angebracht ist. Der Mitnehmerblock 122 ist mit Hilfe von zwei Führungsstangen 123 und 124 in Längsrichtung der Anzeigeskala 119 verschiebbar geführt. Die beiden Führungsstangen 123 und 124 sind in einem U-förmigen Bügel 125 festgehalten, der mit seinen beiden Schenkeln 126 und 127 auf einer Antriebsspindel 128 schwenkbar gelagert ist, die ihrerseits in den beiden Seitenwänden 108 und 109 der Kassettenaufnahme 106 drehbar gelagert ist. Die Antriebsspindel 128 steht im Normalbetrieb mit einer Mitnehmerverzahnung in Eingriff, die am freien Ende eines vom Mitnehmerblock 122 abstehenden L-förmigen Lappens 129 vorgesehen ist. Zwischen einem weiteren vom Mitnehmerblock 122 abstehenden Lappen 130 und dem Schenkel 126 das Bügels 125 ist eine Zugfeder 131 wirksam, die als Rückstellfeder für den Mitnehmerblock 122 und den Zeiger 121 vorgesehen ist. Von dem Schenkel 126 des Bügels 125 steht ein Stift 132 seitlich ab, der mit einer Betätigungsstange 133 gekuppelt ist. Durch Ver schieben der Betätigungsstange 133 in Richtung des Pfeiles 134 ist über den Stift 132 der Bügel 125 so um die Antriebsspindel 128 verschwenkbar, daß der Zeiger 121 von einer eingesetzten Kassette nach oben weggeschwenkt wird, so daß die Kassette unbehindert vom Zeiger 121 aus der Kassettenaufnahme 106 entnommen werden kann und daß die Mitnehmerverzahnung am freien Ende des L-förmigen Lappens 129 des Mitnehmerblockes 122 außer Eingriff von der Antriebsspindel 128 kommt, so daß die Rückstellfeder 131 den Mitnehmerblock 122 und den Zeiger 121 in ihre in Fig.3 dargestellte Ausgangslage zurückstellen kann, in der sich der Mitnehmerblock 122 an zwei an den Führungsstangen 123 und 124 vorgesehenen Anschlägen 135 und 136 abstützt. Das Verschieben der Betätigungsstange 133 wird auf nicht dargestellte Weise von der Verschlußplatte zum Verschließen des Kassettenaufnahmeraumes her gesteuert, und zwar in der Weise, daß beim Öffnen der Verschlußplatte das Verschwenken des Bügels 125 zum Hochschwenken des Zeigers 121 erfolgt. Selbstverständlich kann das Verschieben der Betätigungsstange 133 auch über einen separaten Bedienungsknopf von Hand aus erfolgen.

Der Antrieb des Zeigers 121 erfolgt von der Antriebseinrichtung 116 her. Mit dem Wickeldorn 118 ist ein erstes Pesenrad 137 koaxial verbunden, das über eine Pese 138 mit einem zweiten Pesenrad 139 in Antriebsverbindung steht. Das zweite Pesenrad 139 ist mit einer im Gerät drehbar gelagerten Welle 140 drehfest verbunden. Auf der Welle 140 ist eine mit derselben drehfest verbundene Hülse 141 in axialer Richtung zwischen zwei durch Anschläge 142 und 143 festgelegten Endstellungen verschiebbar geführt. Dies ist mit einer Steg-Nut-Verbindung zwischen Welle 140 und Hülse 141 erreicht. Mit der Hülse 141 sind zwei hinsichtlich der erreichbaren Übersetzungsverhältnisse unterschiedlich ausgebildete Schnecken 144 und 145 fest verbunden. Die beiden Schnecken 144 und 145 weisen unterschiedlich große Gangzahlen auf, und zwar ist die Schnecke 144 eingängig und die Schnecke 145 zweigängig ausgebildet. Die beiden mit der Hülse 141 in axialer Richtung verstellbaren Schnecken 144 und 145 sind zwischen zwei Betriebsstellungen verstellbar und mit einem ortsfesten Schneckenrad 146 in Eingriff bringbar, von dem her der Zeiger 121 antreib bar ist. Hiefür ist das Schneckenrad 146 fest mit der Antriebsspindel 128 verbunden. Bei der in Fig.4 dargestellten Betriebsstellung der beiden Schnecken 144 und 145 steht die eingängige Schnecke 144 mit dem Schneckenrad 146 in Eingriff. In der nicht dargestellten anderen Betriebsstellung, in der sich die Hülse 141 am Anschlag 143 abstützt, steht die zweigängige Schnecke 145 mitdem Schneckenrad 146 in Eingriff, so daß aufgrund der doppelten Gangzahl in dieser Betriebsstellung eine doppelt so große Übersetzung wie in der ersten Betriebstellung erreicht wird.

Die beiden Schnecken 144 und 145 und das Schneckenrad 146 bilden ein Schneckengetriebe 147, das als stufenweise umschaltbares Geschwindigkeitswechselgetriebe vorgesehen ist. Mit einem solchen Schneckengetriebe, das einen Spezialfall eines Zahnradgetriebes darstellt, sind bekanntlich besonders hohe Übersetzungen erreichbar. Somit wird bei vorliegendem Tischdiktiergerät eine hohe Übersetzung, um mit einer relativ kurzen Gesamtlänge der Anzeigeskala für das Zählwerk das Auslangen zu finden, mit dem stufenweise umschaltbaren Geschwindigkeitswechselgetriebe erreicht, ohne daß eine separate Schneckengetriebestufe in der Antriebskette zum Antreiben des Zeigers des Zählwerkes erforderlich ist.

Zum Abtasten der vorstehend beschriebenen, mechanisch abtastbaren Indikatoren zur Indikation des Gesamtaufzeichnungsdauerwertes pro Spur, der mit dem in einer in das Gerät eingesetzten Kassette erreichbar ist, ist im Gerät 102 eine Abtasteinrichtung 148 vorgesehen. Die Abtasteinrichtung 148 weist einen ersten Hebel 149 und einen zweiten Hebel 150 auf. Der erste Hebel 149 ist um einen von der Seitenwand 109 der Kassettenaufnahme 106 abstehenden Lagerstift 151 schwenkbar gelagert und steht unter der Wirkung einer im Gerät abgestützten Blattfeder 152. Die beiden Hebel 148 und 150 sind über einen in den ersten Hebel 149 fest eingesetzten Kopplungsstift 153, um den der zweite Hebel 150 schwenkbar ist, gelenkig gekoppelt. Weiters sind die beiden Hebel über eine den zweiten Hebel 150 mit einem Basisteil 154 umklammernde Schenkelfeder 155 miteinander gekoppelt und mit dieser Schenkelfeder in einer zueinander ausgerichteten Lage haltbar, indem sich die beiden Schenkel 156 und 157 der Schenkelfeder 155 an den miteinander fluchtenden Seitenkanten der beiden Hebel 149 und 150 zugleich abstützen.In den ersten Hebel 149 ist an seinem freien Ende ein seitlich abstehender Abtaststift 158 eingesetzt, der durch einen von der Bodenwand 107 bis in die Seitenwand 109 der Kassettenaufnahme 106 reichenden Durchbruch 159 hindurch in den Kassettenaufnahmeraum hineinragt und mit dem je nach Betriebslage der eingesetzten Kassetten einer der beiden Indikatoren abtastbar ist. Der zweite Hebel 150 steuert die Umschaltung des Geschwindigkeitswechselgetriebes 147 in Abhängigkeit vom abgetasteten Indikator. Hiefür trägt der zweite Hebel 150 an seinem freien Ende einen seitlich abstehenden Umschaltstift 160, der mit seinem freien Ende zwischen die beiden Schnecken 144 und 145 hineinragt, so daß beim Verschwenken des zweiten Hebels 150 die beiden Schnecken 144 und 145 des Geswindigkeitswechselgetriebes 147 in axialer Richtung verschoben werden. Auf diese Weise ist erreicht, daß die Abtasteinrichtung 148 die Umschaltung des Geschwindigkeitswechselgetriebes 147 zum Antreiben des Zeigers 121 in Abhängigkeit vom abgetasteten Indikator steuert. Somit ist auch bei diesem Gerät auf einfache Weise stets für ein richtiges Umschalten des Geschwindigkeitswechselgetriebes gesorgt, so daß Fehlanzeigen mit dem Zählwerk mit Sicherheit ausgeschlossen sind.

Wenn eine Kassette gemäß dem ersten Kassettentyp in das Gerät 102 eingesetzt wird, die als Indikatoren 111 und 112 Ausnehmungen aufweist, dann tritt der Abtaststift 158 in die Ausnehmung ein, und es bleibt daher der erste Hebel 149 unverstellt in der in Fig.4 dargestellten Lage. Über die Schenkelfeder 155 bleibt dabei der zweite Hebel 150 in seiner zum ersten Hebel 149 ausgerichteten Lage, wobei der Umschaltstift 160 über die zweite Schnecek 145 die Hülse 141 gegen den Anschlag 142 angelegt hält. Daher bleibt die eingängige Schnekke 144 mit dem Schneckenrad 146 in Eingriff. Wenn eine Kassette gemäß dem zweiten Kassettentyp in das Gerät 102 eingesetzt wird, dann wird aufgrund der fehlenden Ausnehmungen von der als Indikator wirkenden durchgehenden unteren Kassettenhauptwand der Abtaststift 158 verstellt, so daß der erste Hebel 149 entgegen der Kraft der Blattfeder 152 verschwenkt wird. Über die Schenkelfeder 155 wird diese Schwenkbewegung auf den zweiten Hebel 150 übertragen, so daß der Umschaltstift 160 über die erste Schnecke 144 die Hülse 141 zum Anschlag 143 hin verstellt, wobei dann die zweite Schnecke 145 mit dem Schneckenrad 146 in Eingriff kommt. Sollten beim Ineingriffbringen einer Schnecke mit dem Schneckenrad die Verzahnungen derselben ungünstig aufeinandertreffen, so daß das Ineingriffbringen nicht unmittelbar erfolgen kann, wobei dann der zweite Hebel aus seiner gegenüber dem ersten Hebel ausgerichteten Lage herausverschwenkt wird, wird einer der beiden Schenkel 156 bzw. 157 der Schenkelfeder 155 gespannt und liefert, sobald das Geschwindigkeitswechselgetriebe in Bewegung gesetzt wird, die Kraft zum Ineingriffbringen der Getriebeteile. Die Schenkelfeder 155 bildet somit eine Überlastsicherung, wie dies beim Gerät des Systems gemäß den Figuren 1 und 2 in analoger Weise mit der Drahtfeder 97 realisiert ist. Da die Übersetzung mit der zweigängigen Schnecke 145 genau doppelt so groß ist wie mit der eingängigen Schnecke 144, ist erreicht, daß bei in das Gerät eingesetzter Kassette gemäß dem zweiten Kassettentyp die Antriebsspindel 128 genau doppelt so - schnell angetrieben wird wie bei ins Gerät eingesetzter Kassette vom ersten Kassettentyp, so daß auch bei diesem System mit der vorgegebenen Gesamtlänge der Anzeigeskala 119 beide Gesamtaufzeichnungsdauerwerte von dreißig Minuten bzw. fünfzehn Minuten anzeigbar sind.

Wie bereits erwähnt, weist das in der Fig. 5 teilweise dargestellte Tischdiktiergerät 161 eine gegenüber dem Tischdiktiergerät 102 des Systems gemäß den Figuren 3 und 4 etwas abgewandelte Ausbildung auf, weshalb in der Fig. 5 dargestellte Geräteteile, die mit Geräteteilen des Gerätes gemäß den Figuren 3 und 4 identisch sind, mit denselben Bezugszeichen wie in Fig. 3 bezeichnet sind.

In das Tischdiktiergerät 161 des Systems gemäß Fig. 5 ist ebenso wie in die vorstehend beschriebenen beiden Diktiergeräte 1 und 102 der Systeme gemäß den Figuren 1 und 2 bzw. 3 und 4 jeweils eine Kassette in zwei zueinander gewendeten Betriebslagen einsetzbar. Die Kassette 162, die in Fig.6 detailliert und in Fig. 5 mit strichpunktierten Linien nur schematisch dargestellt ist, weist einen analogen Aufbau wie die in den Figuren 1 und 2 bzw. 3 und 4 dargestellten Kasset ten 4 bzw. 105 auf. Jedoch sind die auch als Ausnehmungen im Kassettengehäuse ausgebildeten Indikatoren 163 und 164 zur Indikation des mit dem in der Kassette 162 untergebrachten Magnetband 165 pro Spur erreichbaren Gesamtaufzeichnungsdauerwertes anders ausgebildet. Und zwar sind diese je einer Spur, also je einer Betriebslage einer Kassette zugeordneten Ausnehmungen 163 und 164 in den beiden vorderen Eckenbereichen der Kassette 162 vorgesehen und sie erstrecken sich bis zu den beiden Kassettenhauptwänden, zu der vorderen - schmalen Kassettenwand 166 und respektiv bis zu einer seitlichen schmalen Kassettenwand 167 bzw. 168. Aufgrund dieser Ausbildung der Ausnehmungen 163 und 164 weist die Kassettte, in Richtung senkrecht auf die vordere schmale Kassettenwand 166 gesehen, in ihrem Vorderbereich zwei zueinander symmetrische seitliche Einschnürungen gegenüber dem übrigen Kassettengehäuse auf.

Ferner weist die Kassette 162 an ihrer vorderen schmalen Kassettenwand 166 zwei Löschsperr-Indikatoren 169 und 170 auf, die in Fig. 5 nur - schematisch angegeben sind und die je einer der beiden zueinander gewendeten Betriebslagen der Kassetten, somit je einer Spur des in der Kassette 162 untergebrachten Magnetbandes 165 zugeordnet sind. Die Löschsperr-Indikatoren 169 und 170 sind in an sich bekannter Weise durch mit ausbrechbaren Lappen verschlossene Durchbrüche gebildet. Die in einer Spur gespeicherten Informationssignale sind dabei dann vor Löschen geschützt, wenn bei dem dieser Spur zugeordneten Löschsperr-Indikator 169 bzw. 170 der Lappen ausgebrochen ist. Zu erwähnen ist auch noch, daß ebenso wie die Kassette 105 des Systems gemäß den Figuren 3 und 4 die Kassette 162 des Systems gemäß Fig.5 an den Kassettenhauptwänden keine Anzeigestreifen aus magnetisch orientierbare Partikel enthaltendem Material aufweist. Es können aber bei einer abgewandelten Ausführungsform der Kassetten des Systems gemäß Fig.5 an den abgewandelten Kassetten sehr wohl solche Anzeigestreifen aus magnetisch orientierbare Partikel enthaltendem Material vorgesehen sein.

Ebenso wie in die beiden vorstehend beschriebenen Diktiergeräte 1 und 102 der Systeme gemäß den Figuren 1 und 2 bzw. 3 und 4 sind in das Tischdiktiergerät 161 Kassetten zweier un terschiedlicher Kassettentypen einsetzbar, wobei mit dem in einer Kassette gemäß einem ersten Kassettentyp untergebrachten Magnetband pro Betriebslage, also pro Spur ein Gesamtaufzeichnungsdauerwert von dreißig Minuten und mit dem in einer Kassette gemäß einem zweiten Kassettentyp untergebrachten Magnetband pro Betriebslage, also pro Spur ein Gesamtaufzeichnungsdauerwert von fünfzehn Minuten erreichbar ist. Eine Kassette gemäß dem ersten Kassettentyp ist in den Figuren 5 und 6 dargestellt. Diese Kassette weiset zur Indikation des Gesamtaufzeichnungsdauerwertes von dreißig Minuten pro Spur in ihren beiden vorderen Eckenbereichen die beiden als Ausnehmungen im Kassettengehäuse ausgebildeten Indikatoren 163 und 164 auf, die je einer Spur zugeordnet sind. Weiters weist diese Kassette an ihren beiden Hauptwänden je eine Anzeigeskala 171 mit einer vorgegebenen Gesamtlänge auf, deren Endpunkte mit "0" bzw. "30" bezeichnet sind. Die Kassetten gemäß dem zweiten Kassettentyp weisen in ihren beiden vorderen Eckenbereichen keine solche Ausnehmungen als Indikatoren auf, sondern die Kassettenwände sind in dem Bereich, in dem die Kassetten gemäß dem ersten Kassettentyup die Ausnehmungen aufweisen, durchgehend ausgebildet, so daß die durchgehenden Kassettenwände die Indikatoren zur Indikation des Gesamtaufzeichnungsdauerwertes von fünfzehn Minuten pro Spur bilden. Weiters weisen die Kassetten des zweiten Kassettentyps an ihren beiden Hauptwänden auch je eine Anzeigeskala auf, deren Gesamtlänge mit der vorgegebenen Gesamtlänge der Anzeigeskala 171 an den Hauptwänden der Kassetten des ersten Kassettentyps übereinstimmt und deren Endpunkte mit "0" bzw. "15" bezeichnet sind.

Das Tischdiktiergerät 161 weist zum Anzeigen des der jeweils im Gerät fortbewegten Magnetbandmenge entsprechenden Aufzeichnungsdauerwertes ein Zählwerk 120 auf, das zur Gänze denselben Aufbau aufweist wie das Zählwerk des Tischdiktiergerätes 102 des Systems gemäß den Figuren 3 und 4 und von dem in Fig.5 nur der Zeiger 121 und der U-förmige Bügel 125 dargestellt ist. Der Antrieb des Zeigers 121 erfolgt vollkommen gleich wie beim Gerät 102 des Systems gemäß den Figuren 3 und 4 von der Antriebseinrichtung 116 her über ein als Geschwindigkeitswechselgetriebe vorgesehenes Schneckengetriebe.

Zum Abtasten der vorstehend beschriebenen, mechanisch abtastbaren Indikatoren 163 bzw. 164 zur Indikation des Gesamtaufzeichnungsdauerwertes pro Betriebslage der Kassetten, also pro Spur am Magnetband , der mit dem in einer in das Gerät eingesetzten Kassette erreichbar ist, ist im Tischdiktiergerät 161 eine Abtasteinrichtung 148 vorgesehen, die mit der Abtasteinrichtung des Tischdiktiergerätes 102 des Systems gemäß den Figuren 3 und 4 vollkommen übereinstimmt. Wenn in das Gerät 161 eine Kassette gemäß dem ersten Kassettentyp eingesetzt wird, die als Indikatoren 163 und 164 Ausnehmungen aufweist, dann tritt der Abtaststift 158 der Abtasteinrichtung 148, ohne vom Kassettengehäuse verstellt zu werden, in die betreffende Ausnehmung ein, und es bleibt daher der erste Hebel 149 unverstellt, so daß genauso wie beim Gerät 102 des Systems gemäß den Figuren 3 und 4 die eingängige Schnecke mit dem Schneckenrad des Geschwindigkeitswechselgetriebes zum Antreiben des Zeigers 121 des Zählwerkes 120 in Eingriff bleibt. Wenn eine Kassette gemäß dem zweiten Kassettentyp in das Gerät 161 eingesetzt wird, dann wird aufgrund der fehlenden Ausnehmungen von der als Indikator wirkenden durchgehenden Kassettenhauptwand der Abtaststift 158 verstellt, so daß der erste Hebel 149 entgegen der Kraft der Blattfeder 152 verschwenkt wird, wobei dann die zweite Schnecke mit dem Schneckenrad des Geschwindigkeitswechselgetriebes in Eingriff kommt. Da die Übersetzung mit der zweigängigen Schnecke genau doppelt so groß ist wie mit der eingängigen Schnecke, ist erreicht, daß bei in das Gerät eingesetzter Kassette gemäß dem zweiten Kassettentyp die Antriebsspindel des Zählwerkes 120 genau doppelt so schnell angetrieben wird wie bei in das Gerät eingesetzter Kassette vom ersten Kassettentyp, so das mit der vorgegebenen Gesamtlänge der Anzeigeskala 171 beide Gesamtaufzeichnungsdauerwerte von dreißig Minuten bzw. fünfzehn Minuten anzeigbar sind.

Zum Abtasten der Löschsperr-Indikaotren 169 bzw. 170 ist im Tischdiktiergerät 161 nur eine einzige weitere Abtasteinrichtung 172 vorgesehen. Die Abtasteinrichtung 172 weist einen elektrischen Schalter 173 mit zwei Federkontakten auf, wobei an einem Federkontakt ein Abtaststift 174 angebracht ist, mit dem die Indikatoren 169 bzw. 170, je nachdem in wel cher der beiden zueinander gewendeten Betriebslagen eine Kassette in das Gerät eingesetzt ist, abtastbar sind. Bei ausgebrochenem Lappen des abgetasteten Indikators 169 bzw. 170 dringt der Abtaststift 174 in den betreffenden Durchbruch ein, wie dies in Fig.5 dargestellt ist, wobei dann der Schalter 173 in seinem geöffneten Zustand bleibt. Dieser Schaltzustand wird im Gerät 161 nicht näher dargestellte Weise so ausgewertet, daß ein Löschen von bestehenden Aufzeichnungen und ein Aufzeichen von neuen Aufzeichnungen durchführbar ist. Bei nichtausgebrochenem Lappen des abgetasteten Indikators 169 bzw. 170 wird der Abtaststift 174 vom Lappen so verschwenkt, daß der Schalter 173 in seinen geschlossenen Schaltzustand gebracht wird. Dieser Schaltzustand wird im Gerät so ausgewertet, daß kein Löschen bzw. Aufzeichnen von Aufzeichnungen möglich ist. Selbstverständlich könnte die weitere Abtasteinrichtung zum Abtasten der Löschsperr-Indikatoren 169 bzw. 170 auch durch einen von einem aus-brechbaren Lappen entgegen Federkraft verstellba-ren Hebel oder Schieber gebildet sein, der auf mechanische Weise, beispielsweise durch Zusammenwirken mit dem Betätigungsorgan zum Einschalten der Betriebsart "Aufzeichnen", das Einschalten der Betriebsart "Aufzeichnen" und folglich das Löschen bzw. Aufzeichnen von Aufzeichnungen unterbindet.

Auch beim Tischdiktiergerät 161 des Systems gemäß Fig.5 wird wie bei den beiden vorstehend beschriebenen Geräten der Systeme gemäß den Figuren 1 und 2 bzw. 3 und 4 das Geschwindigkeitswechselgetriebe zum Antreiben des Zählwerkzeigers durch das Einsetzen einer Kassette in das Gerät automatisch und sicher in die dem erreichbaren Gesamtaufzeichnungsdauerwert pro Spur dieser Kassette entpsrechende Geschwindigkeitsübersetzung geschaltet, so daß die unterschiedlich langen Gesamtaufzeichnungsdauerwerte pro Spur mit derselben Skalenlänge der Anzeigeskala des Zählwerkes anzeigbar sind. Dadurch, daß die in das Gerät des Systems gemäß Fig.5 eingesetzte Kassette als Indikatoren fur die Gesamtaufzeichnungsdauerwerte pro Spur in den vorderen Eckenbereichen vorgesehene Ausnehmungen aufweist, ist ferner der Vorteil erhalten, daß beim Einsetzen dieser Kassette in das Gerät, wobei die Kassette parallel zu ihren Kassettenhauptwänden und mit ihrer vorderen schmalen Kassettenwand voran auf die im Gerät feststehend angeordneten Magnetköpfe zubewegt wird, der Abtaststift 158 der Abtasteinrichtung 148 unmittelbar in die betreffende Ausnehmung eintreten kann, ohne daß dieser Abtaststift zuvor vom Kassettengehäuse aus seiner Ruhelage heraus verstellt werden muß. Dies ist in Hinblick auf ein leichtgängiges und ungestörtes Einsetzen einer Kassette in das Gerät und auf eine geringe Beanspruchung der Abtasteinrichtung vorteilhaft. Dieselben Vorteile werden aufgrund der Anordnung der Löschsperr-Indikatoren an der vorderen schmalen Kassettenwand auch im Zusammenhang mit der weiteren Abtasteinrichtung zum Abtasten der Löschsperr-Indikatoren erhalten. Die Tatsache, daß sowohl die Ausnehmungen, die als Indikatoren zur Indikation der Gesamtaufzeichnungsdauerwerte pro Spur vorgesehen sind, als auch die Ausnehmungen, die als Löschsperr-Indikatoren vorgesehen sind, im Bereich der vorderen schmalen Kassettenwand mit der betreffenden Abtasteinrichtung abtastbar sind, ist ferner dahingehend vorteilhaft, daß die Abtasteinrichtungen in Richtung senkrecht zu den Kassettenhauptwänden praktisch keinen Raumbedarf in Anspruch nehmen, so daß eine möglichst geringe Bauhöhe erreicht wird, was insbesondere für tragbare Taschendiktiergeräte günstig ist und angestrebt wird.

Im Rahmen der Erfindung sind noch eine Reihe von weiteren Ausführungen möglich. Beispielsweise können bei einem weiteren System in ein Gerät auch Kassetten von mehr als zwei Kassettentypen, die sich hinsichtlich der Gesamtaufzeichnungsdauerwerte pro Spur unterscheiden, einsetzbar sein, wobei dann das Geschwindigkeitswechselgetriebe in Abhängigkeit der Indikatoren zur Indikation dieser Gesamtaufzeichnungsdauerwerte in eine der Anzahl der Kassettentypen entsprechende Anzahl von Übersetzungsstufen schaltbar ist. Dabei können als Indikator für einen Gesamtaufzeichnungsdauerwert auch mehrere Ausnehmungen am Kassettengehäuse vorgesehen sein. Bei den vorstehend beschriebenen Ausführungsbeispielen handelt es sich um Systeme mit Diktiergeräten. Die Erfindung kann auch bei anderen Systemen mit Aufzeichnungs- und/oder Wiedergabegeräten für bandförmige Aufzeichnungsträger, beispielsweise bei Systemen mit sogenannten Radiorecordern oder Videorecordern, zur Anwendung gelangen. Die Angabe der Gesamtaufzeich nungsdauerwerte erfolgt bei den vorstehend beschriebenen Systemen mit Diktiergeräten in Minuten. Selbstverständlich können die Gesamtaufzeichnungsdauerwerte auch in anderen Größen, beispielsweise in Metern, angegeben werden. Unterschiedlich große Gesamtaufzeichnungsdauerwerte sind nicht nur durch unterschiedlich lange Aufzeichnungsträger, sondern auch durch unterschiedlich große Fortbewegungsgeschwindigkeiten von gleich langen Aufzeichnungsträgern erreichbar. Beim Stirnzahnradgetriebe des Gerätes des Systems gemäß dem ersten Ausführungsbeispiel sind die von der Antriebseinrichtung für den Aufzeichnungsträger her angetriebenen Stirnzahnräder in axialer Richtung verstellbar und die Stirnzahnräder, von denen das Anzeigeelement des Zählwerkes angetrieben wird, sind ortsfest angeordnet; gegebenenfalls kann ein Stirnzahnradgetriebe auch ortsfeste Stirnzahnräder, die von der Antriebseinrichtung für den Aufzeichnungsträger angetrieben werden, und axial verstellbare Stirnzahnräder zum Antreiben des Anzeigeelementes des Zählwerkes aufweisen.

## Ansprüche

1. System zum Aufzeichnen und/oder Wiedergeben von Signalen, das ein Gerät und bandförmige Aufzeichnungsträger umfaßt, die im systemgemäßen Gerät fortbewegbar und mit denen unterschiedlich große Gesamtaufzeichnungsdauerwerte erreichbar sind, welches Gerät zum Anzeigen des der jeweils im Gerät fortbewegten Aufzeichnungsträgermenge entsprechenden Aufzeichnungsdauerwertes ein Zählwerk aufweist, das ein entlang einer Anzeigeskala mit einer vorgegebenen Gesamtlänge wanderndes Anzeigeelementes aufweist, das von einer Antriebseinrichtung für den Aufzeichnungsträger her über ein stufenweise umschaltbares Geschwindigkeitswechselgetriebe antreibbar ist, das korrespondierend zu den unterschiedlich großen Gesamtaufzeichdungsdauerwerten auf unterschiedlich große, zu den korrespondierenden Gesamtaufzeichnungsdauerwerten umgekehrt proportionale Geschwindigkeitsübersetzungen schaltbar ist, so daß mit der vorgegebenen Gesamtlänge der Anzeigeskala alle Gesamtaufzeichnungsdauerwerte anzeigbar sind, dadurch gekennzeichnet, daß das Gerät zur Aufnahme von einschlägigen Kassetten ausgebildet ist , in der je ein Aufzeichnungsträger unterbracht ist, daß die Kassetten zur Indikation des mit dem Aufzeichnungsträger erreichbaren Gesamtaufzeichnungsdauerwertes je mindestens einen Indikator aufweisen und im Gerät eine Abtasteinrichtung zum Abtasten des Indikators vorgesehen ist und daß die Abtasteinrichtung die Umschaltung des Geschwindigkeitswechselgetriebes zum Antreiben des Anzeigeelementes in Abhängigkeit vom abgetasteten Indikator steuert.

2. System nach Anspruch 1 mit einem als Zahnradgetriebe ausgebildeten Geschwindigkeitswechselgetriebe, dadurch gekennzeichnet, daß das Zahnradgetriebe eine der Anzahl von unterschiedlich großen Gesamtaufzeichnungsdauerwerten entsprechende Anzahl von zueinander koaxialen, hinsichtlich der erreichbaren Übersetzungsverhältnisse unterschiedlich ausgebildeten Getriebeteilen aufweiset, die zum Umschalten des Zahnradgetriebes in axialer Richtung zwischen einer der Anzahl von unterschiedlich großen Gesamtaufzeichnungsdauerwerten entsprechenden Anzahl von Betriebsstellungen verstellbar sind und dabei mit mindestens einem ortsfesten Getriebeteil in Eingriff bringbar sind.

3. System nach Anspruch 2, dadurch gekennzeichnet, daß die verstellbaren Getriebeteile durch Stirnzahnräder mit unterschiedlich großen Durchmessern gebildet sind, die mit zu diesen korrespondierenden, ebenfalls zueinander koaxialen ortsfesten Stirnzahnrädern in Eingriff bringbar sind.

4. System nach Anspruch 2, dadurch gekennzeichnet, daß die verstellbaren Getriebeteile durch von der Antriebseinrichtung her antreibbare Schnecken mit unterschiedlich großen Gangzahlen gebildet sind, die mit einem ortsfesten Schneckenrad in Eingriff bringbar sind, von dem her das Anzeigeelement antreibbar ist.

5. System nach einem der vorhergehenden Ansprüche, dadurch gekennzeichnet, daß die einschlägigen Kassetten mit einem mechanisch mit der Abtasteinrichtung abtastbaren Indikator versehen sind und die Abtasteinrichtung zwei Hebel aufweist, die zumindest über eine Feder miteinander gekoppelt und mit der Feder in einer zueinander ausgerichteten Lage haltbar sind und von denen einer den Indikator an der Kassetten abtastet und der andere die Umschaltung des Geschwindigkeitswechselgetriebes steuert.

6. System nach einem der vorhergehenden Ansprüche, wobei die Kassetten zwei parallele Kassettenhauptwände, eine vordere und eine hintere - schmale Kassettenwand und zwei seitliche schmale Kassettenwände besitzen, dadurch gekennzeichnet, daß die Kassetten in zwei hinsichtlich der beiden Kassettenhauptwände zueinander gewendeten Betriebslagen in ein systemgemäßes Gerät einsetzbar sind, daß jeder der beiden Betriebslagen der Kassetten mindestens ein eigener Indikator an der Kassette zugeordnet ist und die den beiden Betriebslagen zugeordneten Indikatoren in zwei hinsichtlich der beiden Kassettenhauptwände zueinander gewendeten Positionen an der Kassette vorgesehen sind, daß das Gerät nur eine einzige Abtasteinrichtung aufweist und daß jeder der den beiden Betriebslagen zugeordneten Indikatoren mit der einzigen Abtasteinrichtung abtastbar ist.

7. System nach Anspruch 6, dadurch gekennzeichnet, daß die Indikatoren je durch eine Ausnehmung im Kassettengehäuse gebildet sind und jede der Ausnehmungen sich bis zu einer Kas settenhauptwand und einer seitlichen schmalen Kassettenwand erstreckt.

8. System nach Anspruch 7, dadurch gekennzeichnet, daß jede der beiden Ausnehmungen in einem vorderen Eckenbereich des Kassettengehäuses vorgesehen ist und sich bis zu beiden Kassettenhauptwänden, einer seitlichen schmalen Kassettenwand und der vorderen schmalen Kassettenwand erstreckt, so daß die Kassette, in Richtung senkrecht auf die vordere schmale Kassettenwand gesehen, in ihrem Vorderbereich zwei zueinander symmetrische seitliche Einschnürungen gegenüber dem übrigen Kassettengehäuse aufweist.

9. System nach Anspruch 8, dadurch gekennzeichnet, daß die Kassetten zusätzlich an ihrer vorderen schmalen Kassettenwand zwei Löschsperr-Indikatoren aufweisen, die je einer der beiden zueinander gewendeten Betriebslagen der Kassetten zugeordnet und in zwei hinsichtlich der beiden Kassettenhauptwände zueinander gewendeten Positionen an der Kassette vorgesehen sind, daß das Gerät nur eine weitere Abtasteinrichtung zum Abtasten der beiden Löschsperr-Indikatoren besitzt und daß beim Einsetzen einer Kassette in das Gerät durch Verschieben der Kassette parallel zu den Kassettenhauptwänden und mit der vorderen - schmalen Kassettenwand voran die Indikatoren mit den beiden Abtasteinrichtung abtastbar sind.

10. Gerät gehörend zu einem System nach einem der vorhergehenden Ansprüche.

11. Kassette gehörend zu einem System nach einem der vorhergehenden Ansprüche.

**Fig.1**

0 269 133

1-Ⅲ-PHO 86-511

Fig.2

Fig.3

Fig.4

**Fig.5**

**Fig.6**